# EUROPÄISCHE PATENTSCHRIFT

(11) **EP 0 658 271 B1**
(45) Veröffentlichungstag und Bekanntmachung des Hinweises auf die Patenterteilung: **24.04.1996**
(21) Anmeldenummer: 93912610.8
(22) Anmeldetag: 18.06.1993
(51) Int. Cl.: H01F 38/30

(54) **STROMWANDLER**
CURRENT TRANSFORMER
TRANSFORMATEUR DE COURANT

(30) Priorität: 02.09.1992 DE 4229680
(43) Veröffentlichungstag der Anmeldung: 21.06.1995
(73) Patentinhaber: SIEMENS AKTIENGESELLSCHAFT, D-80333 München (DE)
(72) Erfinder: GORABLENKOW, Jörg, D-13591 Berlin (DE)
(86) Internationale Anmeldenummer: DE9300543
(87) Internationale Veröffentlichungsnummer: WO9406135

(56) Entgegenhaltungen:
- EP-A- 0 063 636
- DE-A- 1 488 165
- DE-A- 1 807 996
- DE-A- 4 106 034

## Beschreibung

Die Erfindung bezieht sich auf einen Stromwandler zum Einbau in eine auf Erdpotential liegende, einen Hochspannungsleiter umgebende Metallkapselung mit mindestens einem Ringkern, einer auf den Ringkern aufgebrachten Sekundärwicklung und mindestens einer geerdeten Schutzwicklung.

Ein derartiger Stromwandler ist aus der DE-OS 41 06 034 bekannt. Der dort beschriebene Stromwandler weist ein mehrere Ringkerne zusammenfassendes, die Ringkerne durchdringendes inneres Rohr auf, das aus elektrisch leitendem Material besteht und auf der einen Zylinderstirnseite mit der geerdeten Kapselung leitend verbunden ist. Zum Schutz des Stromwandlers vor Überspannungen in der Sekundärwicklung infolge von Schaltvorgängen ist beim bekannten Stromwandler auf dem Ringkern mindestens eine zusätzlich zur Sekundärwicklung aufgebrachte Schutzwicklung vorgesehen, die mit einem Ende mit Erdpotential leitend verbunden ist und aus einem Draht, einem Band oder einer Folie bestehen kann.

Es besteht die Aufgabe, einen Stromwandler der eingangs genannten Art anzugeben, bei dem Überspannungen aufgrund von Zu- und Abschaltvorgängen schnellster Strom- und Spannungsänderungen gering gehalten werden.

Diese Aufgabe wird erfindungsgemäß dadurch gelöst, daß der Ringkern auf der Ringaußenseite von einem innerhalb der Metallkapselung angeordneten hohlzylindrischen, elektrisch leitenden Abschirmkörper koaxial umgeben ist, der eine Bezugserde für die im wesentlichen radial verlaufende Erdverbindung der Schutzwicklung bildet.

Durch Anwendung des Erfindungedankens können die Erdverbindungen kurz gehalten werden, so daß die Induktivität der Erdverbindung vernachlässigt werden kann. Der elektrisch leitende Abschirmkörper, der die Bezugserde bildet, stellt eine Sammelschiene für Hochfrequenzströme dar, die zur Kontaktierung mit mehreren Erdverbindungen einer Mehrzahl von Ringkernen bestimmt ist. Dementsprechend kann die Schutzwicklung mehrere über den äußeren Umfang des Ringkernes gleichmäßig verteilt angeordnete im wesentlichen radial verlaufende Erdverbindungen aufweisen, die je einzeln mit dem Abschirmkörper kontaktiert sind.

Bei einer ersten Ausführungsform ist der Abschirmkörper von einem zylindrisch geformten Blech- oder Folienkörper gebildet. Dabei kann der so gebildete Zylindermantel Durchtrittsöffnungen für die Erdverbindungen aufweisen, die mit der Außenseite des Abschirmkörpers elektrisch verbunden werden. Der Abschirmkörper kann aber auch von einem Käfig mit mantellinienparallel verlaufenden Stäben gebildet sein, die untereinander elektrisch leitend verbunden sind.

Bei einer weiteren Ausführungsform der Erfindung kann der Abschirmkörper von Zylindersegmenten gebildet sein, die mit mantellinienparallelen Zwischenräumen um den Ringkern gleichmäßig über den Umfang verteilt angeordnet sind.

Bei einem anderen Beispiel eines Stromwandlers nach der Erfindung ist der Abschirmkörper bevorzugt zylinderstirnseitig zu beiden Seiten mit der Kapselung elektrisch leitend verbunden.

Anhand der Zeichnung sind Ausführungsbeispiele des Stromwandlers nach der Erfindung beschrieben und die Wirkungsweise erläutert.

Dabei zeigt:
Figur 1 eine Metallkapselung mit einem Stromwandler und einem Hochspannungsleiter schematisch in einem Längsschnitt.
Figur 2 in einem Querschnitt durch die Metallkapselung nach Figur 1 schematisch zwei verschiedene Einzelheiten aus Figur 1 in je einem Halbschnitt.
Figur 3 einen weiteren Querschnitt durch die Metallkapselung nach Figur 1
Figur 4 eine zweite Ausführungsform eines Stromwandlers in einem der Figur 3 entsprechenden Schnitt
Figur 5 eine dritte Ausführungsform des erfindungsgemäßen Stromwandlers in einem der Figur 3 entsprechenden Querschnitt.

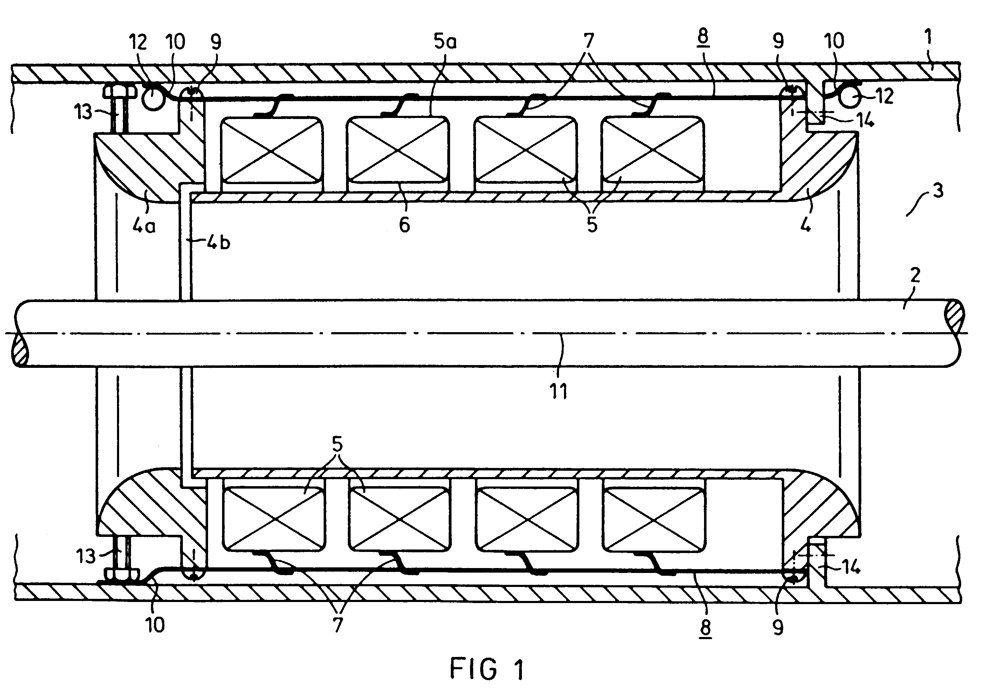

In Figur 1 ist schematisch ein Stromwandler für eine druckgasisolierte, beispielsweise mit SF₆ gefüllte Hochspannungsschaltanlage dargestellt, die eine elektrisch geerdete Kapselung 1 aufweist. Die Kapselung 1 ist rohrförmig ausgebildet und trägt über nicht weiter dargestellte Stützisolatoren einen Hochspannungsleiter 2. In dem zwischen der Kapselung 1 und dem Hochspannungsleiter 2 gebildeten Raum 3 befindet sich SF₆ unter einem Druck von beispielsweise 5 bar. In die Kapselung 1 ist ein Stromwandler eingebaut, der einen im wesentlichen rohrförmigen Tragkörper 4 aufweist. Der Tragkörper 4 faßt im dargestellten Ausführungsbeispiel vier Ringkerne 5 zusammen, die beispielsweise mittels einer Vergußmasse untereinander auf Abstand gehalten und gegenüber dem Tragkörper verklebt sind. Jeder Ringkern 5 ist zusätzlich zu seiner Sekundärwicklung mit einer geerdeten Schutzwicklung 6 versehen, die aus einem Draht oder einem Band bestehen kann. Die Schutzwicklung 6 hat gleichmäßig über den äußeren Umfang verteilt angeordnete, im wesentlichen radial verlaufende Erdverbindungen 7, die auf kürzestem Wege zu einem Abschirmkörper 8 geführt und dort kontaktiert sind. Der Abschirmkörper 8 umgibt die Ringkerne 5 auf der Ringaußenseite 5a koaxial und ist aus elektrisch leitendem Material gefertigt. Ersichtlich ist der Abschirmkörper 8 hohlzylindrisch z. B. aus einem Blech oder einer Folie, geformt.

In dem oberhalb der strichpunktierten Mittellinie 11 gezeichneten Ausführungsbeispiel ist der Abschirmkörper 8 im Bereich der Stirnseiten durch Schrauben 9 in seiner Lage fixiert. Die freien Stirnendenbereiche 10 sind geschlitzt und nach außen gegen die Kapselung 1 gedrückt. Zur Sicherstellung der elektrischen Verbindung zwischen dem Abschirmkörper 8 und der Kapselung 1 wird der geschlitzte Stirnendenbereich 10 von einem Federring 12 belastet und nach außen gedrückt.

Bei dem unterhalb der Mittellinie 11 dargestellten Ausführungsbeispiel nach Figur 1 wird die Kontaktierung des geschlitzen Randbereiches 10 über Schrauben 13 vorgenommer, die im ringförmigen Teil 4a des rohrförmigen Tragorganes 4 verstellbar angeordnet sind. Die Teile 4, 4a sind ersichtlich durch einen Spalt 4b, ggf. unter Zwischenlage eines Isolierstoffteiles elektrisch getrennt, allerdings durch den Abschirmkörper 8 elektrisch leitend verbunden. Die Schrauben 13 dienen zugleich zur Positionierung des Stromwandlers, der an einem radial nach innen vorspringenden Anschlaglappen oder Flansch 14 starr mit der Kapselung 1 verbunden ist.

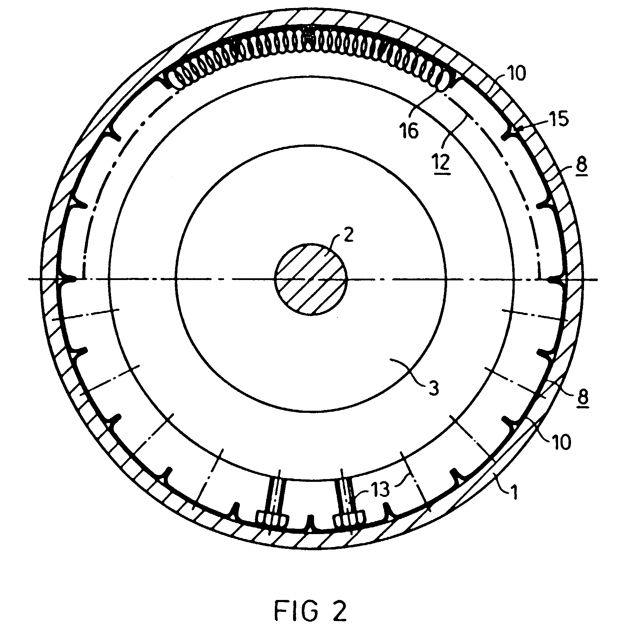

In der Figur 2 ist im oberen Teil des Querschnitts der Randbereich 10 mit Schlitzen 15 versehen und von einer zylindrischen Schraubenfeder 16 als Druckorgan 12 belastet. In dem unteren Teil des Querschnitts ist die Variante schematisch dargestellt, bei der die Schrauben 13 den geschlitzten Randbereich 10 des Abschirmkörpers 8 mit der Kapselung 1 kontaktieren.

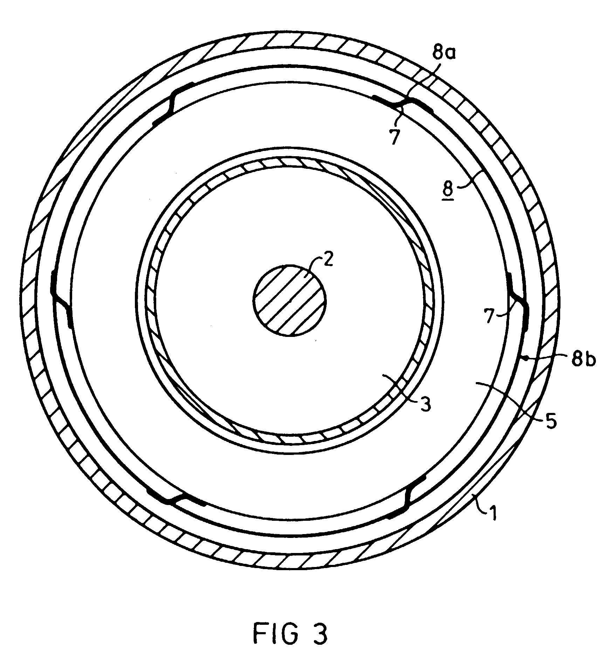

Die Figur 3 zeigt schematisch einen aus einer Folie oder einem Blech gefertigten Abschirmkörper 8 mit Durchtrittsöffnungen 8a für die im wesentlichen radia-l verlaufenden Erdverbindungen 7, die radial mehrfach aus der Schutzwicklung eines Ringkernes 5 nach außen treten. Die Erdverbindungen 7 sind von der Außenseite 8b des Abschirmkörpers kontaktiert.

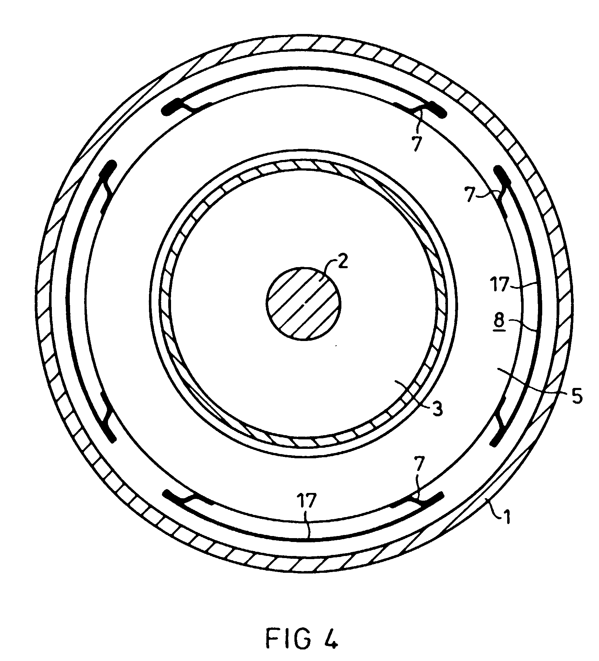

Bei dem in Figur 4 dargestellten Ausführungsbeispiel ist der Abschirmkörper 8 aus vier Hohlzylindersegmenten 17 gebildet, die je zwei Erdverbindungen 7 eines jeden Ringkernes 5 kontaktieren.

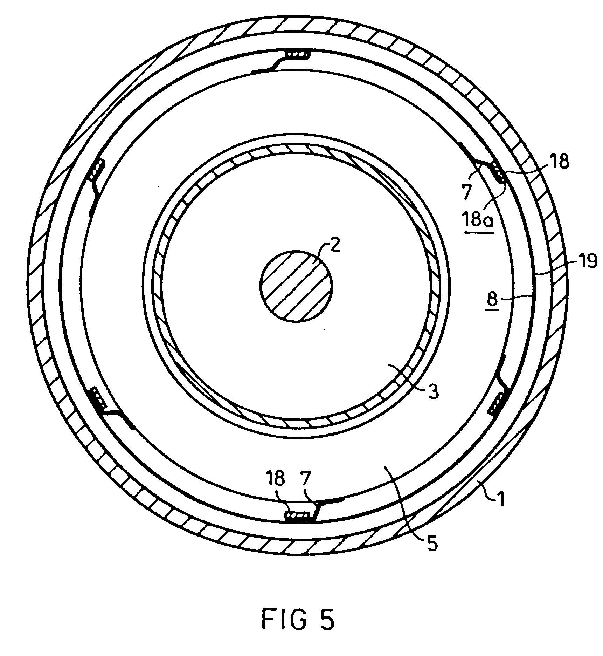

In der Figur 5 ist ein Ausführungsbeispiel eines Stromwandlers gezeichnet, bei dem der Abschirmkörper 8 von einem Käfig 18a mit mantellinienparallel sich erstreckenden Stäben 18 gebildet ist, die je eine Erdverbindung 7 eines jeden Ringkernes 5 kontaktieren und untereinander durch ein Band 19 oder dgl. elektrisch leitend verbunden sind. Im übrigen sind in allen Figuren gleiche Teile mit gleichen Bezugszeichen versehen.

## Patentansprüche

1. Stromwandler zum Einbau in eine auf Erdpotenial liegende, einen Hochspannungsleiter (2) umgebende Metallkapselung (1), mit mindestens einem Ringkern (5), einer auf den Ringkern (5) aufgebrachten Sekundärwicklung und mindestens einer geerdeten Schutzwicklung (6),
**dadurch gekennzeichnet**, daß der Ringkern (5) auf der Ringaußenseite (5a) von einem innerhalb der Metallkapselung (1) angeordneten hohlzylindrischen, elektrisch leitenden Abschirmkörper (8) koaxial umgeben ist, der eine Bezugserde für die im wesentlichen radial verlaufende Erdverbindung (7) der Schutzwicklung (6) bildet.

2. Stromwandler nach Anspruch 1,
**dadurch gekennzeichnet**, daß die Schutzwicklung (6) mehrere über den äußeren Umfang des Ringkerns (5) gleichmäßig verteilt angeordnete, radial verlaufende Erdverbindungen (7) aufweist, die Je einzeln mit dem Abschirmkörper (8) kontaktiert sind.

3. Stromwandler nach Anspruch 1 oder 2,
**dadurch gekennzeichnet**, daß der Abschirmkörper (8) von einem zylindrisch geformten Blech- oder Folienkörper gebildet ist.

4. Stromwandler nach Anspruch 1 oder 2,
daß der Abschirmkörper (8) von einem Käfig (18a) mit mantellinienparallel verlaufenden Stäben (18) gebildet ist.

5. Stromwandler nach Anspruch 1 oder 2,
**dadurch gekennzeichnet**, daß der Abschirmkörper (8) von Zylindersegmenten (17) gebildet ist, die mit mantellinienparallelen Zwischenräumen um den Ringkern (5) gleichmäßig über den Umfang verteilt angeordnet sind.

6. Stromwandler nach einem der Ansprüche 1 bis 5,
**dadurch gekennzeichnet**, daß der Abschirmkörper (8) zylinderstirnseitig zu beiden Seiten (10) mit der Kapselung (1) elektrisch leitend verbunden ist.

## Claims

1. Current transformer for installation in a metal enclosure (1) at earth potential surrounding a high-voltage conductor (2), having at least one annular core (5), a secondary winding applied to the annular core (5) and at least one earthed protective winding (6), characterized in that the annular core (5) is surrounded coaxially on the outside (5a) by a hollow cylindrical, electrically conducting screen (8), which is arranged inside the metal enclosure (1) and forms a reference earth for the essentially radial earth connection (7) of the protective winding (6).

2. Current transformer according to Claim 1, characterized in that the protective winding (6) has a plurality of radial earth connections (7) which are arranged uniformly distributed over the outer periphery of the annular core (5) and which are each contacted individually by the screen (8).

3. Current transformer according to Claim 1 or 2, characterized in that the screen (8) is formed by a cylindrically shaped sheet-metal or film element.

4. Current transformer according to Claim 1 or 2, characterized in that the screen (8) is formed by a cage (18a) having rods (18) extending parallel to surface lines.

5. Current transformer according to Claim 1 or 2, characterized in that the screen (8) is formed from cylinder segments (17) which are arranged with interspaces parallel to surface lines distributed uniformly over the periphery around the annular core (5).

6. Current transformer according to one of Claims 1 to 5, characterized in that the screen (8) is electrically conductively connected to the enclosure (1) at the ends of the cylinder on both sides (10).

## Revendications

1. Transformateur d'intensité destiné à être monté dans une enveloppe métallique (1) placée au potentiel de terre et entourant un conducteur à haute tension (2), qui comporte au moins un noyau toroïdal (5), un enroulement secondaire monté sur le noyau toroïdal (5) et au moins un enroulement de protection (6) raccordé à la terre, caractérisé par le fait que le noyau toroïdal (5) est entouré, du côté extérieur (5a), d'un corps (8) de blindage cylindrique creux conducteur de l'électricité, qui est disposé à l'intérieur de l'enveloppe métallique (1) et qui forme une terre de référence pour la connexion de terre (7), de l'enroulement de protection (6), laquelle s'étend sensiblement radialement, .

2. Transformateur d'intensité suivant la revendication 1, caractérisé par le fait que l'enroulement de protection (6) comporte plusieurs connexions de terre (7) qui s'étendent radialement, qui sont disposées en étant réparties uniformément sur la périphérie extérieure du noyau toroïdal (5) et qui sont chacune en contact avec le corps de blindage (8).

3. Transformateur d'intensité suivant la revendication 1 ou 2, caractérisé par le fait que le corps de blindage (8) est formé d'un corps en forme de tôle ou de feuille et de forme cylindrique.

4. Transformateur d'intensité suivant la revendication 1 ou 2, caractérisé par le fait que le corps de blindage (8) est formé d'une cage (18a) comportant des barreaux (18) parallèles aux génératrices.

5. Transformateur d'intensité suivant la revendication 1 ou 2, caractérisé par le fait que le corps de blindage (8) est formé de segments de cylindres (17), qui sont disposés, ainsi que les espaces intercalaires parallèles aux génératrices, en étant répartis uniformément sur la périphérie autour du noyau toroïdal (5).

6. Transformateur d'intensité suivant l'une des revendications 1 à 5, caractérisé par le fait que des deux côtés (10) frontaux du cylindre, le corps de blindage (8) est relié de manière à conduire l'électricité à l'enveloppe (1).
